# EUROPEAN PATENT SPECIFICATION

(11) **EP 1 300 071 B1**
(45) Date of publication and mention of the grant of the patent: **30.03.2005**
(21) Application number: 02078988.9
(22) Date of filing: 27.09.2002
(51) Int. Cl.: A01K 5/02

(54) **A device for supplying feed to animals**
Einrichtung zum Zuführen von Nahrungsmittel für Haustiere
Dispositif pour la distribution de nourriture à des animaux domestiques

(30) Priority: 03.10.2001 NL 1019091
(43) Date of publication of application: 09.04.2003
(73) Proprietor: Lely Enterprises AG, 6300 ZUG (CH)
(72) Inventor: Voogd, Lucien Eliza Niels, 4143 HG Leerdam (NL); Van den Berg, Karel, 2971 BR Bleskensgraaf (NL)
(74) Representative: Corten, Maurice Jean F.M.

(56) References cited:
- NL-C- 1 010 898

## Description

The invention relates to a device for supplying feed to animals according to the preamble of claim 1.

Such a device is known from Dutch patent application 1010898. Although this known device functions properly in practice, it appears that, in order to guarantee proper sanitary conditions of the device, a regular cleaning of the device is desirable. This cleaning takes much time and entails costs, while the device cannot be used during cleaning.

It is an object of the invention to obviate the drawbacks related to the cleaning at least partially.

For that purpose a device for supplying feed to animals of the above-described type according to the invention comprises the measures according to the characterizing part of claim 1. The invention is based on the insight that, in particular when there is supplied rather wet or adhesive feed by the known device, parts of the feed remain on components of the device and contaminate these, so that regular cleaning of the device is desirable. By controlling the device, according to the invention, by means of the control device in such a way that the sorts of feed are supplied to the feed trough in order of increasing adhesiveness factor, the feed having the lowest adhesiveness is always supplied first. In comparison with feed having a higher adhesiveness, this feed moves faster over the components of the device and appears to remove at least partially feed from a previous supply of feed that is still adhering to the components. Thus there is obtained a better cleaning. The device according to the invention has the additional advantage of enabling to wrap minerals and/or medicines in the feed. These are preferably added last to the feed, so that the medicines and/or minerals adhere to the most adhesive feed and will come at a high degree of certainty into the feed trough where they can be taken by the animal.

In an embodiment of a device according to the invention, the control device is provided with a computer comprising a memory with a correspondence table containing values in relation to the adhesiveness factor of the sorts of feed. Additionally or alternatively the computer comprises a memory with a correspondence table containing data in relation to the contents of the hoppers. In this way the device can function automatically in a reliable manner.

Although the data in relation to the sort of feed respectively the corresponding hoppers can be inputted into the computer, it is preferred when the device is provided with feed-determining means for determining the sort of feed in a hopper. Such feed-determining means may comprise for example an olfactometer, a colour meter or picture recognition equipment.

An advantageous embodiment of a device according to the invention is characterized in that the device is provided with a receptacle, the conveying means comprising a first conveyor for conveying an amount of feed from the hopper to the receptacle and a second conveyor for conveying the amount of feed from the receptacle to the feed trough. The receptacle is preferably provided with a weighing device for measuring feed present in the receptacle. This makes it possible to determine the amount of feed to be supplied to the feed trough.

Although the feed can be taken out of the receptacle by means of a separate taking-out device, for the sake of simplicity of the construction it is advantageous when there is not used a separate device for taking out. There may be used a tiltable receptacle, feed falling from said receptacle after the latter has been tilted. However, for improving the hygienic use of the device, it is preferred when the receptacle has a bottom which is designed to be opened. The receptacle is preferably provided with a control device for controlling the opening of the bottom.

In a preferred embodiment of a device according to the invention, the device is provided with a container for containing edible packaging material and with supplying means for supplying the edible packaging material to the receptacle, and the device comprises a control device for first carrying out the supply of the edible packaging material to the receptacle and then conveying feed from the hopper to the receptacle, the edible packaging material being a material that at least substantially does not adhere to components of the device. To that end the feed is wrapped up in at least substantially non-adhering, edible packaging material, so that the contamination of the device is reduced to a considerable extent. As a result thereof the number of times cleaning of the device has to take place is drastically reduced.

An extremely hygienic use of the device according to the invention is obtained when the receptacle has such a shape that, when a package of feed and edible packaging material falls through the bottom, the edible packaging material surrounds the feed at least partially. In this situation in particular receptacles narrowing in downward direction can be applied.

It is in particular advantageous when the edible packaging material is an amount of dry feed. In this situation maize can for example be taken into account. The edible packaging material is preferably constituted by grass.

A preferred embodiment of a device according to the invention is characterized in that the device is provided with identification means for identifying an individual animal, so that the device can function automatically. For feeding animals by means of the device, the individual animal is identified, after which the feed is composed with the aid of a metering device from ingredients originating from one or more hoppers, according to the nutritive need of the individual animal, and the feed is supplied to the feed trough via the receptacle and the conveying means. By means of the weighing device the amount of feed can be attuned to the nutritive need of the individual animal. In this situation the control device preferably controls the functioning of the relevant components of the device.

A device according to the invention can be applied inter alia to milking robots. However, the invention is in particular advantageous when the device is constituted by a feeding column, in which situation several animals can make use of the device simultaneously. For that purpose the feeding column is provided in a manner known per se with a framework located around a central axis, to which framework a number of feed troughs and the hoppers are fitted.

The invention will now be further elucidated with reference to an embodiment shown in the drawing in which:

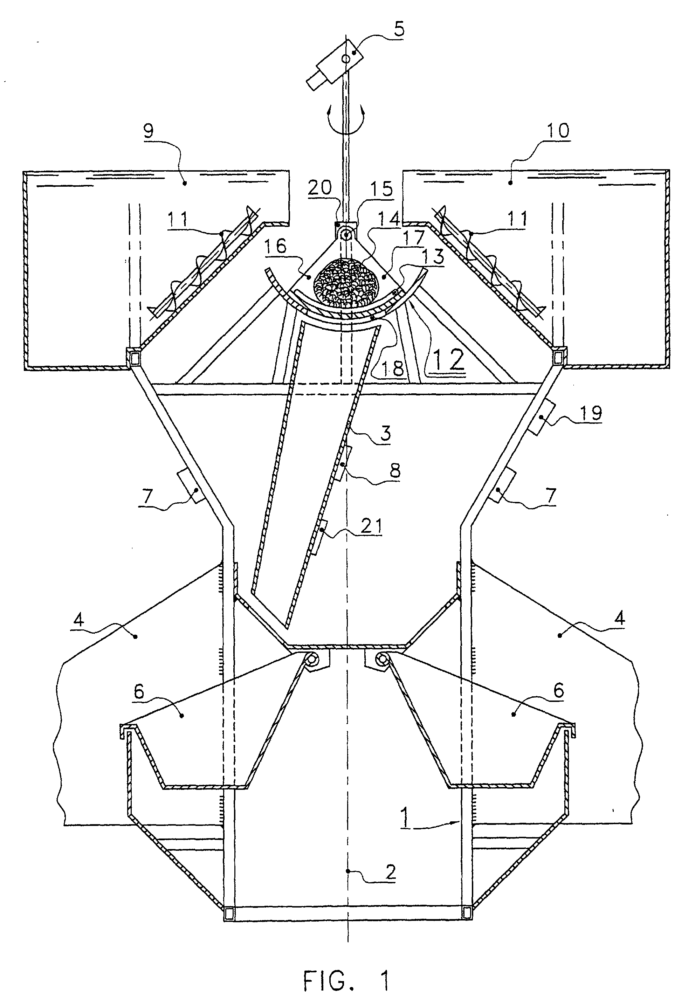

Figure 1 is a schematic cross-section of an embodiment of a device according to the invention.

In the embodiment shown in Figure 1 a framework 1 is disposed around a central axis 2, said framework 1 having a substantially circular circumference. At the upper side of the framework 1 there are provided a number of hoppers 9, 10 (two of which are shown in the drawing). For that purpose not further shown facilities are fitted to the framework 1 for placing the hoppers 9, 10. Each hopper 9, 10 can contain a particular sort of feed.

The framework 1 may be provided with partition walls 4 that are detachably fitted to the framework 1.

Feed troughs 6 for the animals are disposed in circular arrangement in the lower part of the device. By means of the geometry of the device, in the embodiment shown constituted by a feeding column, it is achieved that the construction occupies little space, while the accessibility of the feeding column to the animals is optimal from all directions.

The feeding column is further provided with conveying means comprising a first conveyor 11 and a second conveyor 3 for conveying feed from the hopper 9, respectively 10 to the relevant feed trough 6. The feed can be conveyed directly from the hoppers 9, 10 to the feed troughs 6. In the embodiment shown there is provided a receptacle 12, for example centrally arranged, which receptacle receives an amount of feed which is conveyed by the first conveyor 11 from the hopper 9, 10 to the receptacle 12. As a first conveyor 11, an auger, gripper, belt conveyor or any other device known per se for conveying feed can be used.

A second conveyor 3, preferably constituted by a tube-shaped chute respectively a channel-shaped chute, is suitable for conveying the amount of feed from the receptacle 12 to the relevant feed trough 6. For the purpose of conveying the feed to the relevant feed trough 6 it is advantageous when the tube-shaped chute 3 is rotatably mounted in the feeding column. The tube-shaped chute respectively a channel-shaped chute is preferably made of stainless steel.

According to the invention the device is provided with a control device 19. Said control device 19 controls the components of the device in such a way that the sorts of feed are supplied to the feed trough 6 in order of increasing adhesiveness factor.

The order in which the sorts of feed are placed in the hoppers may correspond with the order of increasing adhesiveness of the feed. By controlling the components accordingly it can be ensured that the conveying means pass in order along the hoppers and consequently take the sorts of feed out of the hoppers in order of adhesiveness. In this situation it is advantageous when the control device 19 is provided with a computer comprising a memory with a correspondence table containing data in relation to the contents of the hoppers. Although this way of supplying feed to the hoppers is possible, this has to be carried out very carefully in order to avoid errors in the feed supply.

In a preferred embodiment of the invention such errors are avoided when the device is provided with feed-determining means 5 for determining the sort of feed in a hopper 9, 10. Such feed-determining means may comprise for example an olfactometer, a colour meter or picture recognition equipment (such as described for example in U.S. patent 4,843,561). The control device 19 is provided with a computer comprising a memory with a correspondence table containing values in relation to the adhesiveness factor of the sorts of feed 13, 14. Thus, when the feed-determining means 5 have determined the sort of feed, the computer can simply determine the adhesiveness factor.

The control device 19 thus ensures that, at the supply of feed, the feed having the lowest adhesiveness is conveyed first by the conveying means. This feed, moving relatively fast due to the small adhesiveness, may have a sweeping respectively cleaning effect on the rests of feed being left from a previous supply of feed.

In the embodiment shown the device is provided with a container, in the embodiment shown for example the hopper 10, for containing at least substantially non-adhering, edible packaging material. Said packaging material may be constituted for example by dry feed, in particular grass.

The first conveyor 11 supplies a certain amount of said packaging material to the receptacle 12, where it will be situated as a kind of bed 13 on the bottom of the receptacle 12.

When the bed 13 has been laid on the bottom, the first conveyor 11 of the hopper 9 is driven for supplying a certain amount of for example rather adhesive or wet feed to the receptacle, where said amount of feed 14 will be situated on the bed 13.

For the purpose of conveying the package consisting of the bed 13 and the amount of feed 14 to the tube-shaped chute pipe 3, the receptacle 12 is provided with a bottom which is designed to be opened. In the embodiment shown this is realised in that the bottom of the receptacle 12 has two halves 16 and 17 which are hingeable about an axis 15. When the halves 16, 17 move away from each other, there is thus created a chute aperture 18 through which the package falls into the tube-shaped chute 3.

The control device 19, although another control device may serve as well for that purpose, controls the opening of the bottom of the receptacle 12. Said control device 19 preferably also controls the operation sequence of the first and second conveyors 11 respectively 3, so that first the edible packaging material and then the amount of feed will come into in the receptacle 12.

Due to the fact that the amount of feed 14 lies on the bed 13 of packaging material, for example a grass bed, in the case that the feed is adhesive, at least substantially no parts of feed will adhere to the components of the device that could come into contact with the feed. Moreover, the package of feed and packaging material remains interesting for an animal to eat.

An extremely hygienic use of the device according to the invention is obtained when the receptacle 12 has such a shape that, when the package of feed 14 and the bed 13 of edible packaging material falls through the bottom, the bed 13 of edible packaging material will surround at least partially the feed 14. In this situation there can be applied in particular receptacles 12 narrowing in downward direction, while a desired shape can simply be determined by standard "trial and error" experiments.

There are provided identification means 7 for identifying an individual animal. In the embodiment shown the identification means 7 are fitted to the framework 1, but it will be obvious that the identification means can also be disposed at other places, such as for example the feed troughs 6. With the aid of the identification means 7 the identity of an animal present at a feed trough 6 is automatically established. By means of correspondence tables stored in the memory of for example the control device 19 the amount of feed intended for that animal can be supplied. By means of a weighing device 20 known per se this amount can be determined. With the aid of data from the animal identification means 7 the control device 19 further controls the movement of the tube-shaped chute 3, so that the latter is located above the correct feed trough 6. The control device 19 further controls the drive of the conveyors 11.

The above-described device can also be used for determining the adhesiveness factor of a sort of feed. To that end a certain amount of a sort of feed is supplied to the tube-shaped chute respectively a channel-shaped chute 3. A contact-determining means 8 determines the moment of contact of an amount of the particular sort of feed with a first place of the tube-shaped chute respectively the channel-shaped chute 3. A leaving-determining means 21 determines the moment when the amount of the particular sort of feed leaves a second place of the tube-shaped chute respectively the channel-shaped chute 3, said second place being remote from the first place. The contact-determining means 8 and the leaving-determining means 21 can be connected with the control device 19, in particular the computer thereof, the latter determining as a period-of-time-determining means the period of time between the moment of contact and the moment of leaving. Said period of time can be stored and/or displayed.

The computer is provided with a program for converting the period of time into an adhesiveness factor, which adhesiveness factor can then be stored and/or displayed. For the purpose of measuring the adhesiveness factor in a uniform, reliable and reproducible manner, the tube-shaped chute respectively a channel-shaped chute is placed at an angle with the horizontal, said angle being approximately 73°. In order to place the tube-shaped chute respectively the channel-shaped chute in the measurement position, there may be provided non-shown means (such as cylinders) for adjusting the angle of the tube-shaped chute respectively the channel-shaped chute. However, a standard measurement angle may also be situated between 45° and 80°, preferably between 65° and 75°. Moreover it is advantageous when the surface of the tube-shaped chute respectively the channel-shaped chute which can be brought into contact with the amount of the particular sort of feed has a predetermined friction coefficient. As a result of this the computer has not to be provided with calculation programs taking the various parameters into account when determining the adhesiveness factor.

## Claims

1. A device for supplying feed (13, 14) to animals, such as cows, the device being provided with a number of hoppers (9, 10), each for containing a stock of a particular sort of feed (13, 14), with a feed trough (6) which is accessible to an animal, and with conveying means (3, 11) for conveying feed (13, 14) from the hoppers (9, 10) to the feed trough (6), **characterized in that** the device is provided with a control device (19), said control device (19) controlling the device in such a way that the sorts of feed are supplied to the feed trough (6) in order of increasing adhesiveness factor.

2. A device as claimed in claim 1, **characterized in that** the control device (19) is provided with a computer comprising a memory with a correspondence table containing values in relation to the adhesiveness factor of the sorts of feed (13, 14).

3. A device as claimed in claim 2, **characterized in that** the computer comprises a memory with a correspondence table containing data in relation to the contents of the hoppers (9, 10).

4. A device as claimed in any one of the preceding claims, **characterized in that** the device is provided with feed-determining means (5) for determining the sort of feed in a hopper (9, 10).

5. A device as claimed in any one of the preceding claims, **characterized in that** the device is provided with a receptacle (12), the conveying means comprising a first conveyor (11) for conveying an amount of feed (13, 14) from the hopper (9, 10) to the receptacle (12) and a second conveyor (3) for conveying the amount of feed (13, 14) from the receptacle (12) to the feed trough (6).

6. A device as claimed in claim 5, **characterized in that** the receptacle (12) is provided with a weighing device (20) for measuring the feed (13, 14) present in the receptacle (12).

7. A device as claimed in claim 5 or 6, **characterized in that** the receptacle (12) has a bottom which is designed to be opened.

8. A device as claimed in claim 7, **characterized in that** that there is provided a control device (19) for controlling the opening of the bottom of the receptacle (12).

9. A device as claimed in any one of the preceding claims 5 through 8, **characterized in that** the device is provided with a container (10) for containing edible packaging material (13) and with supplying means (11) for supplying the edible packaging material (13) to the receptacle (12), and **in that** the device comprises a control device (19) for first carrying out the supply of the edible packaging material (13) to the receptacle (12) and then conveying feed (14) from the hopper (9) to the receptacle (12), the edible packaging material (13) being a material that at least substantially does not adhere to components of the device.

10. A device as claimed in claim 9, **characterized in that** the receptacle (12) has such a shape that, when a package of feed (14) and edible packaging material (13) falls through the bottom, the edible packaging material (13) surrounds the feed (14) at least partially.

11. A device as claimed in claim 10, **characterized in that** the edible packaging material (13) is an amount of dry feed.

12. A device as claimed in claim 10 or 11, **characterized in that** the edible packaging material (13) is grass.

13. A device as claimed in any one of the preceding claims, **characterized in that** the device is provided with identification means (7) for identifying an individual animal.

14. A device as claimed in claim 13, **characterized in that** the control device (19) controls the device partially with the aid of data from the identification means (7).

15. A device as claimed in any one of the preceding claims, **characterized in that** the device is a feeding column.

16. A device as claimed in claim 15, **characterized in that** the feeding column is provided with a framework (1) located around a central axis (2), to which framework (1) a number of feed troughs (6) and the hoppers (9, 10) are fitted.

## Patentansprüche

1. Vorrichtung zum Zuführen von Futter (13, 14) zu Tieren, wie z. B. Kühen, wobei die Vorrichtung versehen ist mit einer Anzahl von Vorratsbehältern (9, 10), die jeweils einen Vorrat einer bestimmten Sorte von Futter (13, 14) enthalten, mit einem Futtertrog (6), zu dem ein Tier Zutritt hat, und mit Fördervorrichtungen (3, 11) zum Befördern von Futter (13, 14) aus den Vorratsbehältern (9, 10) zu dem Futtertrog (6),
**dadurch gekennzeichnet, daß** die Vorrichtung mit einer Steuervorrichtung (19) versehen ist, wobei die Steuervorrichtung (19) die Vorrichtung derart steuert, daß die Futtersorten dem Futtertrog (6) in der Reihenfolge eines zunehmenden Haftungsfaktors zugeführt werden.

2. Vorrichtung nach Anspruch 1,
**dadurch gekennzeichnet, daß** die Steuervorrichtung (19) mit einem Computer versehen ist, der einen Speicher mit einer Korrespondenztabelle umfaßt, die Werte bezüglich des Haftungsfaktors der Sorten von Futter (13, 14) enthält.

3. Vorrichtung nach Anspruch 2,
**dadurch gekennzeichnet, daß** der Computer einen Speicher mit einer Korrespondenztabelle umfaßt, die Daten bezüglich der Inhalte der Vorratsbehälter (9, 10) enthält.

4. Vorrichtung nach einem der vorhergehenden Ansprüche,
**dadurch gekennzeichnet, daß** die Vorrichtung mit einer Futterbestimmungsvorrichtung (5) zum Bestimmen der Futtersorte in einem Vorratsbehälter (9, 10) versehen ist.

5. Vorrichtung nach einem der vorhergehenden Ansprüche,
**dadurch gekennzeichnet, daß** die Vorrichtung mit einem Behälter (12) versehen ist, wobei die Fördervorrichtungen einen ersten Förderer (11) zum Befördern einer Menge an Futter (13, 14) vom Vorratsbehälter (9, 10) zum Behälter (12) und einen zweiten Förderer (3) zum Befördern der Menge an Futter (13, 14) vom Behälter (12) zum Futtertrog (6) umfassen.

6. Vorrichtung nach Anspruch 5,
**dadurch gekennzeichnet, daß** der Behälter (12) mit einer Wiegevorrichtung (20) versehen ist, um das in dem Behälter (12) befindliche Futter (13, 14) zu messen.

7. Vorrichtung nach Anspruch 5 oder 6,
**dadurch gekennzeichnet, daß** der Behälter (12) einen Boden hat, der geöffnet werden kann.

8. Vorrichtung nach Anspruch 7,
**dadurch gekennzeichnet, daß** eine Steuervorrichtung (19) zum Steuern der Öffnung des Bodens des Behälters (12) vorgesehen ist.

9. Vorrichtung nach einem der vorhergehenden Ansprüche 5 bis 8,
**dadurch gekennzeichnet, daß** die Vorrichtung mit einem Behälter (10) zur Aufnahme von eßbarem Verpackungsmaterial (13) und mit Zuführvorrichtungen (11) zum Zuführen des eßbaren Verpackungsmaterials (13) zu dem Behälter (12) versehen ist, und daß die Vorrichtung eine Steuervorrichtung (19) umfaßt, um zuerst die Zuführung des eßbaren Verpackungsmaterials (13) zu dem Behälter (12) und dann die Beförderung von Futter (14) vom Vorratsbehälter (9) zu dem Behälter (12) durchzuführen, wobei das eßbare Verpackungsmaterial (13) durch ein Material gebildet ist, das zumindest im wesentlichen nicht an Komponenten der Vorrichtung haftet.

10. Vorrichtung nach Anspruch 9,
**dadurch gekennzeichnet, daß** der Behälter (12) eine solche Form hat, daß beim Hindurchfallen eines Pakets aus Futter (14) und eßbarem Verpackungsmaterial (13) durch den Boden das eßbare Verpackungsmaterial (13) das Futter (14) zumindest teilweise umgibt.

11. Vorrichtung nach Anspruch 10,
**dadurch gekennzeichnet, daß** das eßbare Verpackungsmaterial (13) durch eine Menge an Trockenfutter gebildet ist.

12. Vorrichtung nach Anspruch 10 oder 11,
**dadurch gekennzeichnet, daß** das eßbare Verpackungsmaterial (13) durch Gras gebildet ist.

13. Vorrichtung nach einem der vorhergehenden Ansprüche,
**dadurch gekennzeichnet, daß** die Vorrichtung mit einer Identifikationsvorrichtung (7) zum Identifizieren eines einzelnen Tieres versehen ist.

14. Vorrichtung nach Anspruch 13,
**dadurch gekennzeichnet, daß** die Steuervorrichtung (19) die Vorrichtung teilweise mit Hilfe von Daten von der Identifikationsvorrichtung (7) steuert.

15. Vorrichtung nach einem der vorhergehenden Ansprüche,
**dadurch gekennzeichnet, daß** die Vorrichtung durch eine Futtersäule gebildet ist.

16. Vorrichtung nach Anspruch 15,
**dadurch gekennzeichnet, daß** die Futtersäule mit einem um eine Mittelachse (2) angeordneten Rahmen (1) versehen ist, wobei an dem Rahmen (1) eine Anzahl von Futtertrögen (6) und die Vorratsbehälter (9, 10) angebracht sind.

## Revendications

1. Dispositif pour distribuer de la nourriture(13, 14) à des animaux, tels que des vaches, le dispositif étant pourvu de plusieurs trémies (9, 10), chacune pour contenir un stock d'un type particulier de nourriture (13, 14), avec une auge (6) à laquelle un animal peut accéder, et avec des moyens de transport (3, 11) pour transporter la nourriture (13, 14) des trémies (9, 10) à l'auge (6), **caractérisé en ce que** le dispositif est pourvu d'un dispositif de commande (19), ledit dispositif de commande (19) commandant le dispositif de manière telle que les types de nourriture sont fournis à l'auge (6) dans un ordre de facteur d'adhésivité croissant.

2. Dispositif selon la revendication 1, **caractérisé en ce que** le dispositif de commande (19) est pourvu d'un ordinateur comprenant une mémoire avec une table de correspondance contenant des valeurs concernant le facteur d'adhésivité des types de nourriture (13, 14).

3. Dispositif selon la revendication 2, **caractérisé en ce que** l'ordinateur comprend une mémoire avec une table de correspondance contenant des données concernant le contenu des trémies (9, 10).

4. Dispositif selon l'une quelconque des revendications précédentes, **caractérisé en ce que** le dispositif est pourvu de moyens de détermination de nourriture (5) pour déterminer le type de nourriture dans une trémie (9, 10).

5. Dispositif selon l'une quelconque des revendications précédentes, **caractérisé en ce que** le dispositif est pourvu d'un réceptacle (12), les moyens de transport comprenant un premier transporteur (11) pour transporter une quantité de nourriture (13, 14) de la trémie (9, 10) au réceptacle (12) et un second transporteur (3) pour transporter la quantité de nourriture (13, 14) du réceptacle (12) à l'auge (6).

6. Dispositif selon la revendication 5, **caractérisé en ce que** le réceptacle (12) est pourvu d'un dispositif de pesée (20) pour mesurer la nourriture (13, 14) présente dans le réceptacle (12).

7. Dispositif selon la revendication 5 ou 6, **caractérisé en ce que** le réceptacle (12) a une partie inférieure qui est conçue pour être ouverte.

8. Dispositif selon la revendication 7, **caractérisé en ce qu'**un dispositif de commande (19) est fourni pour commander l'ouverture de la partie inférieure du réceptacle (12).

9. Dispositif selon l'une quelconque des revendications précédentes 5 à 8, **caractérisé en ce que** le dispositif est pourvu d'un conteneur (10) pour contenir un matériau d'emballage comestible (13) et de moyens de fourniture (11) pour fournir le matériau d'emballage comestible (13) au réceptacle (12), et **en ce que** le dispositif comprend un dispositif de commande (19) pour d'abord réaliser la fourniture du matériau d'emballage comestible (13) au réceptacle (12) et ensuite transporter la nourriture(14) de la trémie (9) au réceptacle (12), le matériau d'emballage comestible (13) étant un matériau qui au moins sensiblement n'adhère pas aux composants du dispositif.

10. Dispositif selon la revendication 9, **caractérisé en ce que** le réceptacle (12) a une forme telle que lorsqu'un emballage de nourriture (14) et matériau d'emballage comestible (13) tombe à travers la partie inférieure, le matériau d'emballage comestible (13) entoure la nourriture (14) au moins partiellement.

11. Dispositif selon la revendication 10, **caractérisé en ce que** le matériau d'emballage comestible (13) est une quantité de nourriture sèche.

12. Dispositif selon la revendication 10 ou 11, **caractérisé en ce que** le matériau d'emballage comestible (13) est de l'herbe.

13. Dispositif selon l'une quelconque des revendications précédentes, **caractérisé en ce que** le dispositif est pourvu de moyens d'identification (7) pour identifier un animal individuel.

14. Dispositif selon la revendication 13, **caractérisé en ce que** le dispositif de commande (19) commande le dispositif partiellement à l'aide de données provenant des moyens d'identification (7).

15. Dispositif selon l'une quelconque des revendications précédentes, **caractérisé en ce que** le dispositif est une colonne d'alimentation.

16. Dispositif selon la revendication 15, **caractérisé en ce que** la colonne d'alimentation est pourvue d'une armature (1) située autour d'un axe central (2), sur laquelle armature (1) sont installées un nombre d'auges (6) et les trémies (9, 10).
